# EUROPÄISCHE PATENTSCHRIFT

(11) **EP 3 314 126 B1**
(45) Veröffentlichungstag und Bekanntmachung des Hinweises auf die Patenterteilung: **21.07.2021**
(21) Anmeldenummer: 16735588.2
(22) Anmeldetag: 14.06.2016
(51) Int. Cl.: F04D 7/04, F04D 13/08, F04D 29/22, F04D 29/70, B01D 33/46, B01D 33/50, B01D 29/66, F04D 29/048

(54) **TEICHPUMPE MIT FILTERREINIGUNGSANORDNUNG**
POND PUMP WITH FILTER CLEANING ARRANGEMENT
POMPE POUR ÉTANG AVEC DISPOSITIF DE NETTOYAGE DE FILTRE

(30) Priorität: 25.06.2015 DE 202015103366 U
(43) Veröffentlichungstag der Anmeldung: 02.05.2018
(73) Patentinhaber: Lindner, Frank, 48282 Emsdetten (DE); Lindner, Timo, 48282 Emsdetten (DE)
(72) Erfinder: LINDNER, Frank, 48282 Emsdetten (DE)
(74) Vertreter: Habbel, Ludwig
(86) Internationale Anmeldenummer: PCT/EP2016/063660
(87) Internationale Veröffentlichungsnummer: WO 2016/207034

(56) Entgegenhaltungen:
- CN-A- 102 141 052
- CN-U- 204 239 279
- FR-A1- 2 480 360
- GB-A- 1 076 462
- JP-A- S6 232 299
- KR-B1- 101 019 856
- US-A- 2 243 585
- US-B1- 6 336 561

## Beschreibung

Wasserpumpen werden in einer Vielzahl von Anwendungsgebieten eingesetzt, beispielsweise im Kühlmittelkreislauf von Verbrennungsmotoren oder anderen industriellen Anwendungen, bei denen das jeweils verwendete Wasser zum Kühlen von Maschinen oder zum Fördern von Material genutzt wird. Zur Abgrenzung gegenüber dem allgemeineren Begriff der Wasserpumpe werden im Rahmen des vorliegenden Vorschlags Wasserpumpen als Teichpumpen bezeichnet, die im Unterschied zu Pumpen, welche in einem maschinellen bzw. industriellen Umfeld eingesetzt werden, in Teichen oder für eher dekorative Zwecke in Wasserspielen eingesetzt werden, und zwar bevorzugt im Freien, z. B. in Gärten, auf Terrassen und dergleichen.

Bei Teichpumpen ist üblicherweise der Pumpen-Ansaugöffnung ein Filter vorgeschaltet, welcher beispielsweise als metallischer Siebkorb aus einem Maschengeflecht oder aus einem Lochblech ausgestaltet sein kann und welcher aufgrund seiner Lochgröße Pflanzenteile oder Insekten zurückzuhalten vermag.

Dabei tritt allerdings häufig das Problem auf, dass organische Bestandteile wie die Reste von Wasserpflanzen, Insekten, in das Wasser gefallene Blätter von umstehenden Bäumen, und ähnliche Partikel von der Wasserpumpe angesaugt werden, sich außen an dem Filter anlagern und den Filter verstopfen, so dass die von der Pumpe geförderte Wassermenge erheblich reduziert wird. Wenn eine Teichpumpe dazu dient, das Teichwasser in ein Filterbecken zu fördern, von dem aus das Wasser dann in den Teich zurückströmt, kann diese erwünschte Filterwirkung des Filterbeckens bei einer eingeschränkten Pumpenleistung nicht sichergestellt werden. Teichpumpen werden allerdings nicht nur tatsächlich in einem Teich betrieben, sondern ganz allgemein im Bereich von Gärten, beispielsweise auch zum Antrieb von Wasserspielen.

Wenn beispielsweise mittels einer Teichpumpe eine "rotierende Kugel" betrieben wird, so wird durch das von der Pumpe geförderte Wasser ein Wasserfilm unterhalb der Kugel geschaffen, so dass die Kugel nahezu reibungsfrei, bzw. ausschließlich durch Flüssigkeitsreibung behindert, auf ihrem Lager aufschwimmt und durch die kontinuierlich strömende Wassermenge in Drehung versetzt wird. Die oben geschilderte Problematik kann aufgrund der eingeschränkten Pumpenleistung dazu führen, dass der für den Drehantrieb der Kugel erforderliche Wasserfilm nicht aufrechterhalten werden kann und die Kugel somit zum Stillstand kommt. Abgesehen davon, dass der Filter verstopft, kann die Drehung der Kugel auch dadurch behindert werden, dass durch den Filter hindurch gelangte Feststoffpartikel stromabwärts von der Pumpe eine Verstopfung bewirken, beispielsweise Ablagerungen innerhalb des sehr schmalen Spalts bilden, der zwischen der Kugel und deren Lager vorgesehen ist, und in dem sich nur der Wasserfilm befinden sollte. Anlagerungen, die in diesem Bereich entstehen, können wie eine mechanische Bremse dazu führen, dass die Strömung des Wassers innerhalb des Wasserfilms nicht mehr ausreicht, um die Kugel in Drehung zu halten. Abgesehen von dem Beispiel der rotierenden Kugel gibt es eine Vielzahl von Wasserspielen mit beweglichen Elementen, deren Funktion ebenfalls davon abhängt, dass wie bei der rotierenden Kugel keine Verschmutzungen in den Bereich der beweglichen Elemente gelangen, und dass eine ausreichende Wasserströmung aufrechterhalten werden kann, der Pumpenfilter also stets eine ausreichende Durchlässigkeit für Wasser aufweist.

In der Praxis besteht daher das Erfordernis, den Filter regelmäßig zu reinigen, um die Wirksamkeit der Teichpumpe aufrechtzuerhalten. Häufig sind die Teichpumpen allerdings aus optischen Gründen versteckt angeordnet und dementsprechend schlecht zugänglich, was die Regelmäßigkeit ihrer Wartung in Frage stellt.

Aus der US 2 243 585 A ist eine selbstreinigende Pumpe bekannt, bei der innerhalb einer zylindrischen Siebfläche ein rotierend angetriebener Verwirbelungskörper angeordnet ist.

Aus der CN 204 239 279 U ist eine Tauchpumpe bekannt, deren Filterfläche in eine hin- und hergehende Vibration versetzt wird, um Anlagerungen von der Siebfläche abzuschütteln. Diese oszillierende Vibration wird mittels Drehbewegung erzeugt. Hierzu ist ein Impeller vorgesehen, welcher in Fließrichtung der Wasserströmung dem Filter nachgeschaltet ist und durch das in die Pumpe einströmende Wasser angetrieben wird. Mittels einer Kurbelwelle und eines Pleuels ist der Impeller mit der Filterfläche verbunden.

Aus der FR 2 480 360 A1 ist eine Anlage bekannt, die einen Elektromotor und eine davon angetriebene Maschine betrifft. Motor und Maschine arbeiten in unterschiedlichen Umgebungen bzw. Medien, beispielsweise einerseits in Luft und andererseits in Wasser. Diese Ausgestaltung einer Anlage kann Pumpen betreffen, aber auch Schiffsantriebe. Die beiden unterschiedlichen Bereiche der Anlage bzw. die unterschiedlichen Medien sind durch ein entsprechend dichtes Gehäuse der Anlage voneinander getrennt. Der Vorschlag besteht darin, keine durchgehende Welle vom Elektromotor zur Maschine zu führen, sondern vielmehr zwei Wellen zu verwenden, und zwar jeweils eine auf den beiden gegenüberliegenden Seiten der Gehäusewand. Die beiden Wellen sind mittels einer magnetischen Kupplung miteinander gekoppelt, so dass die Maschinenwelle von der Motorwelle angetrieben werden kann, ohne dass die Gehäusewand durchbrochen sein muss.

Der Erfindung liegt die Aufgabe zugrunde, eine Teichpumpe dahingehend zu verbessern, dass diese bei möglichst geringem Wartungsbedarf den Durchfluss einer großen Wassermenge mit möglichst wenig darin enthaltenen Verschmutzungen über einen langen Zeitraum ermöglicht.

Diese Aufgabe wird durch eine Teichpumpe nach Anspruch 1 gelöst. Vorteilhafte Ausgestaltungen sind in den Unteransprüchen beschrieben.

Erfindungsgemäß ist also vorgesehen, dass das Wasser innerhalb und außerhalb des Pumpenfilters verwirbelt wird. Zu diesem Zweck ist vorschlagsgemäß innerhalb und / oder außerhalb des Pumpenfilters ein Verwirbelungskörper angeordnet, oder der Pumpenfilter selbst wird in Bewegung versetzt, um eine Verwirbelung des Wassers in unmittelbarer Nachbarschaft der Filterfläche zu bewirken. Hierdurch wird die Anlagerung von Verschmutzungen am Filter erschwert oder sogar vollständig vermieden, so dass der Filter nicht verstopft. Auf diese Weise ist über einen langen Zeitraum eine hohe Pumpenleistung in der Weise sichergestellt, dass eine bestimmte Wassermenge von der Pumpe gefördert werden kann bzw. ein ausreichend hoher Pumpendruck aufrechterhalten werden kann, um eine Wassersäule mit einer bestimmten Höhe erzeugen zu können. Dadurch, dass die Filteroberfläche von Verschmutzungen freigehalten werden kann, kann in Folge der Filter mit einer größeren Filterfeinheit ausgestaltet werden, also mit vergleichsweise kleineren Durchlassöffnungen, so dass dementsprechend auch das von der Pumpe geförderte Wasser vergleichsweise weniger stark mit Feststoffpartikeln beladen ist.

Sollte sich Material in unerwünschter Weise an der Außenseite der Filterfläche anlagern und die Pumpenleistung dadurch verringert werden, so wird auch die Strömung geringer, welche das Material zu der Außenseite der Filterfläche führt bzw. an die Au-ßenseite der Filterfläche andrückt. Daher wird nun im Vergleich zu der Pumpen-Ansaugströmung der Einfluss der Wasserbewegung größer, die durch den Verwirbelungskörper erzeugt wird, da die Pumpe mit unveränderter Drehzahl läuft. Diese Wasserbewegung kann nun das an der Filterfläche anliegende Material von der Filterfläche ablösen, so dass eine selbstreinigende Wirkung erzielt wird.

Zudem ist eine Wartung des Filters in Form einer Entfernung von Partikeln, die sich außen an die Filterfläche angelagert haben, in erheblich längeren Intervallen erforderlich. Diese Wartung kann ggf. sogar ganz entfallen, wenn augenscheinlich der von der Teichpumpe aufgebaute Wasserdruck ausreichend ist - nämlich sich z. B. bei der erwähnten drehenden Kugel die Kugel dreht oder eine Fontäne ausreichend hoch aufsteigt - oder wenn augenscheinlich die von der Teichpumpe geförderte Wassermenge ausreichend ist - nämlich z. B. die in ein Filterbecken einströmende Wassermenge ausreichend groß ist.

Aufgrund der erfindungsgemäßen Ausgestaltung der Teichpumpe wird die Anlagerung von Verschmutzungen außen an der Filterfläche verhindert oder zumindest reduziert. Daher kann die zu verwendende Filterkammer vergleichsweise klein bemessen werden, während bei herkömmlichen Teichpumpen die Filterfläche so groß bemessen ist, dass auch bei angelagerten Verschmutzungen noch ein Durchlass einer Mindest-Wassermenge durch die Filterfläche gewährleistet werden kann. Beispielsweise kann bei einer vorschlagsgemäßen Teichpumpe ein vergleichsweise kleiner Filterkorb als Filterfläche verwendet werden und eine entsprechend kleine Filterkammer bilden. Durch die dementsprechend kleineren baulichen Abmessungen kann eine derartige Teichpumpe auch in beengteren Einbauräumen untergebracht werden, beispielsweise im Sockelbereich von Säulen oder ähnlich ausgestalteten Wasserspielen.

Erfindungsgemäß bildet die Filterfläche selbst einen Verwirbelungskörper, indem sie angetrieben und in Drehung versetzt wird. Der Antrieb erfolgt berührungslos, so dass ein Verletzungsrisiko minimal ist. Abgesehen von der drehenden Filterfläche kann ein zusätzlicher Verwirbelungskörper innerhalb der Filterkammer vorgesehen sein, wie weiter unten näher erläutert wird.

Der Drehantrieb für den Verwirbelungskörper kann auf verschiedene Arten bewirkt werden. Besonders vorteilhaft kann bei bekannten Konstruktionen von Teichpumpen der Drehantrieb für den Verwirbelungskörper mit vergleichsweise geringem konstruktivem Aufwand ermöglicht werden, indem eine drehende, so genannte Filterwelle, die sich bis zur Filterkammer erstreckt, mit der Welle des Antriebsmotors der Teichpumpe verbunden ist. Die Filterwelle kann dabei entweder direkt mit der Welle des Antriebsmotors verbunden sein, so dass sie sich mit derselben Umdrehungszahl dieser Welle dreht, oder es kann eine längere Welle montiert werden, die einen Abschnitt aufweist, welcher wie die herkömmliche Welle des Antriebsmotors ausgestaltet ist, sowie einen sich daran anschließenden Abschnitt, welcher die Filterwelle bildet und sich bis zur Filterkammer erstreckt. Der Anschluss der Filterwelle an die Welle des Antriebsmotors kann jedoch auch über ein zwischengeschaltetes Getriebe erfolgen, so dass sich die Filterwelle mit einer anderen Umdrehungszahl als diese Welle dreht.

Die Montage des Verwirbelungskörpers auf der Filterwelle kann besonders einfach dadurch erfolgen, dass der Verwirbelungskörper ein Röhrchen aufweist, welches auf die Filterwelle aufgeschoben werden kann. Anschließend kann der Verwirbelungskörper frei drehbar auf der Filterwelle gelagert sein oder mittels Klebstoff, Stiften, Schrauben oder dergleichen drehfest mit der Filterwelle verbunden werden.

Die Filterfläche kann feststehend an der Teichpumpe montiert sein, beispielsweise fest an einem Gehäusebauteil der Teichpumpe montiert sein, so dass sie nicht drehbar oder anderweitig beweglich ist. In diesem Fall ist ein Verwirbelungskörper vorgesehen, der die gewünschte Wasserströmung an der Außenseite der Filterfläche bewirkt, welche ein Anlagern von Partikeln oder Gegenständen verhindert.

Erfindungsgemäß ist die Filterfläche beweglich montiert, so dass sie selbst als Verwirbelungskörper wirkt. Der Drehantrieb für die Filterfläche kann auf verschiedene Arten bewirkt werden: als bewegliche Filterfläche kann sie beispielsweise fest mit der sich drehenden Filterwelle verbunden sein, so dass sie sich mit derselben Umdrehungszahl gemeinsam mit der Filterwelle dreht, unabhängig davon, wodurch die Filterwelle angetrieben ist. Oder die Filterfläche kann freilaufend gelagert sein, entweder relativ zu der Filterwelle (gemäß der Erfindung), oder gemeinsam mit der frei drehbar gelagerten, nicht angetriebenen Filterwelle, so dass sie sich mit einer geringeren Drehzahl als z. B. der Antriebsmotor oder ein Pumpenelement der Teichpumpe dreht, beispielsweise wenn die Filterfläche ausschließlich durch die Wasserströmung oder durch berührungslose Antriebskräfte, beispielsweise magnetische Antriebskräfte angetrieben ist.

In dem Fall der beweglichen Filterfläche kann ein Verwirbelungskörper zusätzlich vorgesehen sein. Während die Filterfläche die äußere Begrenzung der Filterkammer bildet, kann der zusätzliche Verwirbelungskörper im Inneren dieser Filterkammer angeordnet sein. Diese beiden unterschiedlichen Verwirbelungskörper können ggf. stark unterschiedliche Strömungswirkungen erzeugen. Um auszuschließen, dass eine Verwirbelung des Wassers in einem solchen Ausmaß erfolgt, dass dadurch die Pumpenleistung unerwünscht stark beeinträchtigt wird, kann vorteilhaft vorgesehen sein, dass sich der äußere Verwirbelungskörper - nämlich die Filterfläche - mit einer geringeren Drehzahl dreht als der innere Verwirbelungskörper im Inneren der Filterkammer. Dies kann beispielsweise dadurch ermöglicht werden, dass der innere Verwirbelungskörper mechanisch angetrieben ist, während die Filterfläche lediglich aufgrund der Wasserströmung frei mitläuft oder mittels eines magnetischen "Mitnahmeeffekts" von dem inneren Verwirbelungskörper oder der Filterwelle berührungslos angetrieben wird, und zwar aufgrund des Wasserwiderstandes mit einer geringeren Drehzahl.

Die Filterfläche sowie gegebenenfalls außen daran befestigte Elemente sind nicht scharfkantig ausgestaltet und stellen somit keine Verletzungsgefahr dar, selbst wenn sie sich drehen. Insbesondere wenn die Filterfläche nicht mechanisch angetrieben ist, und hier insbesondere wenn nicht einmal ein magnetischer Antrieb vorgesehen ist, sondern die Filterfläche völlig frei läuft, stellen weder der geschützt im Inneren der Filterkammer bewegliche, innere Verwirbelungskörper noch die Filterfläche, noch gegebenenfalls außen an der Filterfläche vorhandene, sich mit der Filterfläche drehende Elemente eine Verletzungsgefahr dar, so dass selbst ein Kleinkind ein sich drehendes Filterbauteil der Teichpumpe anhalten kann, ohne sich zu verletzen.

Um definierte Eigenschaften der Teichpumpe sicherzustellen, kann jedoch vorteilhaft vorgesehen sein, im Falle zweier Verwirbelungskörper beide Verwirbelungskörper definiert anzutreiben. Unterschiedliche Drehzahlen können beispielsweise wie folgt erzielt werden: der innere Verwirbelungskörper kann beispielsweise gemeinsam mit der Filterwelle drehangetrieben sein und beispielsweise mit der Motordrehzahl des Antriebsmotors der Teichpumpe laufen. Dies ist beispielsweise der Fall, wenn die Filterwelle entweder als besonders lang ausgestaltete Welle des Antriebsmotors ausgestaltet ist, oder wenn die Filterwelle als separates Bauteil an die Welle des Antriebsmotors angeschlossen ist und auf diese Weise diese Welle verlängert. Gegenüber dieser Motordrehzahl kann die Filterfläche mit geringerer Drehzahl angetrieben sein, indem zwischen der Welle des Antriebsmotors bzw. der Filterwelle einerseits und der Filterfläche andererseits ein Untersetzungsgetriebe angeordnet ist.

Dieses Untersetzungsgetriebe kann vorteilhaft nahe demjenigen Ende der Filterkammer angeordnet sein, welches der Pumpenkammer der Teichpumpe gegenüber liegt, so dass das Einströmen von Wasser in die Pumpenkammer nicht durch das Getriebe beeinträchtigt wird. Das Untersetzungsgetriebe kann dabei entweder selbst innerhalb der Filterkammer angeordnet sein, oder außerhalb davon.

Die Filterfläche kann auf unterschiedliche Weise ausgestaltet sein. Beispielsweise kann sie durch einen offenzelligen Schaumwerkstoff aus Kunststoff oder Keramik gebildet sein, durch ein als Vlies, Gewebe, Gewirke oder dergleichen ausgestaltetes textiles Flächenelement, oder die Filterfläche kann metallisch, beispielsweise durch ein Maschengitter, Streckmetall oder ein Lochblech als Sieb ausgestaltet sein. Insbesondere wenn die Verwirbelungen nicht durch eine Drehbewegung der Filterfläche selbst bewirkt werden, sondern beispielsweise ausschließlich im Inneren einer Filterkammer erzeugt werden, kann die Filterfläche vorteilhaft möglichst dünnwandig ausgestaltet sein, um eine Verwirbelungswirkung auch noch auf der äußeren Seite der Filterfläche, die an das Umgebungswasser angrenzt, sicherzustellen. Erste praktische Versuche haben daher hervorragende Ergebnisse mit Filterflächen gezeigt, die als Maschengitter, Streckmetall oder als Lochbleche ausgestaltet sind.

Aufgrund der Verwirbelung des Wassers auf der Rohseite der Filterfläche kann der Teichfilter über eine lange Zeit störungs-und wartungsfrei, und insbesondere verstopfungsfrei, betrieben werden. Als zusätzlicher Schutz vor Verstopfungen der Filterfläche oder für besonders schwierige Einsatzbedingungen kann zusätzlich ein Abstreifer vorgesehen sein, welcher der Rohseite der Filterfläche anliegt. Der Abstreifer liegt mit einer Abstreifkante, die auch als Abstreifklinge bezeichnet werden kann, der Filterfläche vorzugsweise tangential und entgegen der Drehrichtung der Filterfläche an. Im Unterschied zu einer beispielsweise radialen Ausrichtung des Abstreifers kann auf diese Weise bewirkt werden, dass Material, welches der Filterfläche anhaftet, durch die Drehung der Filterfläche gegen die Abstreifklinge gefördert wird und aufgrund der tangentialen Ausrichtung des Abstreifers auf den Abstreifer aufgeschoben wird. So wird beispielsweise dieses Material zuverlässig von der Filterfläche weg geführt und vermieden, dass sich das Material an der Abstreifklinge aufstaut.

Die Filterwelle kann im Bereich des Gehäuses der Teichpumpe gelagert sein, beispielsweise im Bereich des Motorgehäuses oder der Pumpenkammer, und andererseits frei enden. Vorteilhaft jedoch ist die Filterwelle auch im Abstand von der Pumpenkammer gelagert, beispielsweise an dem von der Pumpenkammer entfernten Ende der Filterkammer. Zu diesem Zweck kann sich vom Gehäuse der Teichpumpe aus ein Steg entlang der Filterkammer erstrecken und zu einem Lagerschild führen, also zu einem Bauteil welches das Lager für die Filterwelle aufweist.

Es können mehrere Stege um den Umfang der Filterkammer verteilt angeordnet sein, beispielsweise in Form von drei oder vier metallischen Stangen, die einerseits am Gehäuse der Teichpumpe befestigt sind und andererseits den Lagerschild tragen. Es kann jedoch auch ein einziger Steg vorgesehen sein, sofern dieser die mechanische Stabilität aufweist, um das Lager im Lagerschild stets an der für die Lagerung der Filterwelle geeigneten Position zu halten.

In einer vorteilhaften Ausgestaltung kann der Steg zu einer Schale oder Haube weitergebildet sein, welche die Filterkammer teilweise umgibt, und welche insbesondere vorteilhaft unterhalb von der Filterkammer angeordnet sein kann. Insbesondere wenn die Teichpumpe im schlammigen Bodenbereich eines Teichs aufgestellt wird, kann ein solcher schalen- oder haubenartiger Steg, ggf. in Zusammenwirkung mit dem Lagerschild, eine Schutzhaube bilden, die das Eindringen von Schlamm in die Filterkammer verhindert.

Unabhängig von der Ausgestaltung des einen oder der mehreren Stege kann eine solche Schutzhaube ggf. als separates Bauteil vorgesehen sein, so dass dieses Bauteil bei dementsprechenden Einsatzbedingungen der Teichpumpe wahlweise montiert werden kann.

Ausführungsbeispiele werden nachfolgend anhand der rein schematischen Darstellungen näher beschrieben. Dabei zeigt
- Fig. 1: eine perspektivische Ansicht auf ein erstes Ausführungsbeispiel einer Teichpumpe,
- Fig. 2 bis 9: verschiedene Ausführungsbeispiele von Verwirbelungskörpern, und die
- Fig. 10: eine perspektivische Ansicht auf den Bereich der Filterkammer eines zweiten Ausführungsbeispiels einer Teichpumpe.

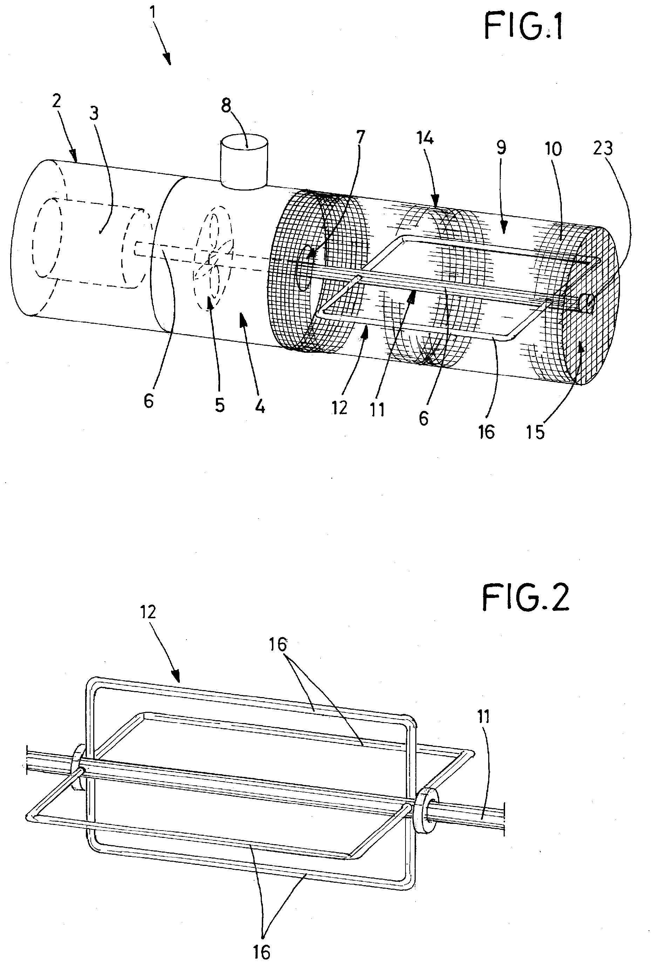

Fig. 1 zeigt ein Ausführungsbeispiel einer Teichpumpe 1, die nicht trocken aufgestellt wird, also außerhalb des Wassers, sondern die zum Einsatz im Wasser vorgesehen ist. Die Teichpumpe 1 weist ein Motorgehäuse 2 auf, in dem ein elektrischer Antriebsmotor angeordnet und mit 3 gestrichelt angedeutet ist. An das Motorgehäuse 2 schließt eine Pumpenkammer 4 an, in welcher ein von dem Antriebsmotor 3 in Drehung versetztes Pumpenelement 5 läuft, wobei als Pumpenelement 5 ein Bauteil der Teichpumpe 1 bezeichnet ist, welches die Wasserströmung erzeugt und welches beispielsweise als Propeller oder Flügelrad ausgestaltet sein kann.

Bei dem dargestellten Ausführungsbeispiel ist vorgesehen, dass sich eine Motorwelle 6 vom Antriebsmotor 3 und aus dem Motorgehäuse 2 bis in die Pumpenkammer 4 erstreckt, und dass das Pumpenelement 5 auf dieser Motorwelle 6 befestigt ist, so dass sich das Pumpenelement 5 mit der Drehzahl des Antriebsmotors 3 dreht.

Abweichend von dem dargestellten Ausführungsbeispiel kann vorgesehen sein, dass die Motorwelle 6 aus mehreren, axial hintereinander angeordneten Abschnitten besteht, und dass zwischen dem Antriebsmotor 3 und dem Pumpenelement 5 ein Getriebe angeordnet ist. Das Getriebe kann beispielsweise bei der Herstellung der Teichpumpe 1 werkseitig im Motorgehäuse 2 untergebracht sein.

Die Pumpenkammer 4 weist eine Einlassöffnung 7 auf sowie eine Auslassöffnung 8. Die Einlassöffnung 7 fluchtet axial mit dem Antriebsmotor 3, dem Pumpenelement 5 und der Motorwelle 6. Der Einlassöffnung 7 ist in Strömungsrichtung des Wassers eine Filterkammer 9 vorgeschaltet, deren Wand zumindest teilweise durch eine für Wasser durchlässige Filterfläche 10 gebildet wird, beispielsweise ein Drahtgitter, ein Lochblech, ein offenporiger Schaumwerkstoff oder dergleichen.

Wenn, wie oben als Alternative zu dem dargestellten Ausführungsbeispiel erwähnt, zwischen dem Antriebsmotor 3 und dem Pumpenelement 5 ein Getriebe angeordnet sein soll, so kann dies alternativ zu einer Anordnung im Motorgehäuse 2 vorteilhaft im Bereich der Filterkammer 9 angeordnet sein, und zwar besonders vorteilhaft im Abstand von der Einlassöffnung 7 der Pumpenkammer 4. Somit ist erstens sichergestellt, dass bei unveränderten Abmessungen des Motorgehäuses 2 und der Pumpenkammer 4 der Strömungsweg für das zu fördernde Wasser von der Einlassöffnung 7 bis zur Auslassöffnung 8 nicht beeinträchtigt wird. Zweitens wird eine Nachrüstung vorhandener, handelsüblicher Teichpumpen ermöglicht, indem die Filterkammer 9 samt Einbauten, einschließlich des erwähnten Getriebes, an die vorhandene Teichpumpe montiert wird, um so eine vorschlagsgemäße Teichpumpe 1 zu schaffen.

Durch die Wirkung des Pumpenelements 5 wird ungefiltertes Umgebungswasser durch die Filterfläche 10 hindurch in die Filterkammer 9 und durch die Einlassöffnung 7 hindurch in die Pumpenkammer 4 eingesaugt und aus der Pumpenkammer 4 durch die Auslassöffnung 8 aus der Teichpumpe 1 heraus gefördert. An die Auslassöffnung 8 kann sich ein Schlauch oder eine Rohrleitung anschließen, um das Wasser nicht nur mittels der Teichpumpe 1 und deren Filterfläche 10 zu filtern, sondern gefiltertes Wasser zu einer entfernten Stelle zu fördern, beispielsweise kann die Teichpumpe 1 in einem vergleichsweise tieferen Teich angeordnet sein und das Wasser zu einem separaten, gegebenenfalls flacheren Filterbecken fördern. Die Außenseite der Filterkammer 9 wird auch als Rohseite bezeichnet, weil sich dort ungefiltertes Umgebungswasser befindet. Die Innenseite der Filterkammer 9 wird auch als deren Reinseite bezeichnet, weil sich dort das gefilterte Wasser befindet, welches die Filterfläche 10 passiert hat.

Bei dem Pumpenaufbau des dargestellten Ausführungsbeispiels ist die Motorwelle 6 vom Motor 3 und dem Pumpenelement 5 weiter verlängert, so dass sie sich bis in die Filterkammer 9 erstreckt. Alternativ dazu kann eine separate Welle vorgesehen sein, die entweder an das Pumpenelement 5 anschließt und von diesem in Drehung versetzt wird, oder die an die Motorwelle 6 anschließt und von dieser in Drehung versetzt wird. Eine solche separate Welle ermöglicht es als Nachrüstlösung, eine vorhandene Teichpumpe vorschlagsgemäß auszugestalten.

Jedenfalls wird im Ergebnis eine Welle geschaffen, die im Rahmen des vorliegenden Vorschlags als Filterwelle 11 bezeichnet wird, da diese innerhalb der Filterkammer 9 verläuft. Die Filterwelle 11 trägt einen Verwirbelungskörper 12, welcher bei dem Ausführungsbeispiel der Fig. 1 zwei aus Draht bestehende Bügel 16 aufweist, die einen rechteckigen Rahmen formen. Die Bügel 16 sind gemeinsam mit der Filterwelle 11 beweglich und können die gewünschte Verwirbelung bewirken, da sie fest an der Filterwelle 11 montiert sind und daher gemeinsam mitsamt der Filterwelle 11 drehbar sind und so eine Strömung im Wasser an der Außenseite der Filterfläche 10 erzeugen, die der insgesamt in die Einlassöffnung 7 gerichteten Wasserströmung überlagert ist und verhindert, dass sich unerwünschtes Material an der Außenseite der Filterfläche 10 anlagert.

Bei dem dargestellten Ausführungsbeispiel stellt derjenige Abschnitt der Motorwelle 6 die Filterwelle 11 dar, welcher sich in der Filterkammer 9 befindet, so dass bei dem dargestellten Ausführungsbeispiel die Filterwelle 11 mit der Motordrehzahl des Antriebsmotors 3 mitläuft. Falls die Filterwelle 11 als separate Welle ausgestaltet ist und an das Pumpenelement 5 anschließt, und falls dabei zwischen dem Antriebsmotor 3 und dem Pumpenelement 5 ein Getriebe angeordnet ist, dreht sich die Filterwelle 11 mit einer dementsprechend zum Antriebsmotor 3 unterschiedlichen Drehzahl. Alternativ zu diesen rein beispielhaft erläuterten Aufbaumöglichkeiten sind dem Fachmann andere konstruktive Ausgestaltungen geläufig, beispielsweise indem mittels eines eigenen Antriebs - beispielsweise mittels eines Elektromotors - die Filterwelle 11 angetrieben wird, so dass in einem derartigen Fall keine mechanische Verbindung von der Filterwelle 11 zum Antriebsmotor 3 oder zu einem vom Antriebsmotor 3 in Drehung versetzten Bauteil vorgesehen sein muss.

Bei dem Ausführungsbeispiel der Fig. 1 ist die Filterkammer 9 zylindrisch ausgestaltet. Sie wird einerseits durch diejenige Stirnwand der Pumpenkammer 4 begrenzt, in welcher sich die Einlassöffnung 7 befindet, und im Übrigen wird die Filterkammer 9 durch die haubenförmige Filterfläche 10 begrenzt, welche eine umlaufende, zylindrische Umfangswand 14 sowie eine zweite Stirnwand 15 der Filterkammer 9 bildet. In dieser zweiten Stirnwand 15 ist ein Lager 23 für die Filterwelle 11 angeordnet, beispielsweise ein Ring aus Kunststoff oder Metall, durch den sich die Filterwelle 11 erstreckt. Abweichend von dem dargestellten Ausführungsbeispiel kann die zweite Stirnwand 15 der Filterkammer 9 als geschlossene Platte ausgestaltet sein.

Bei dem Ausführungsbeispiel der Fig. 1 trägt die zylindrische Umfangswand 14 die Stirnwand 15. Abweichend davon kann vorgesehen sein, dass die Stirnwand 15 an einem oder mehreren Haltern im Abstand von der Pumpenkammer 4 gehalten wird. Die Filterfläche 10 kann in diesem Fall konstruktiv besonders einfach ausgestaltet sein, nämlich nicht haubenförmig, sondern als zylindrischer Rohrabschnitt und der eine bzw. die mehreren erwähnten Halter sowie eine Ausgestaltung der Stirnwand 15 als geschlossene Platte ermöglichen eine sehr stabile Lagerung der Filterwelle 11.

Fig. 2 zeigt einen Verwirbelungskörper 12 als eine erste Weiterentwicklung des Verwirbelungskörpers 12 von Fig. 1, wobei im Unterschied zu Fig. 1 vier Bügel 16 vorgesehen sind, deren zwei rechteckige Rahmen kreuzweise zueinander angeordnet sind.

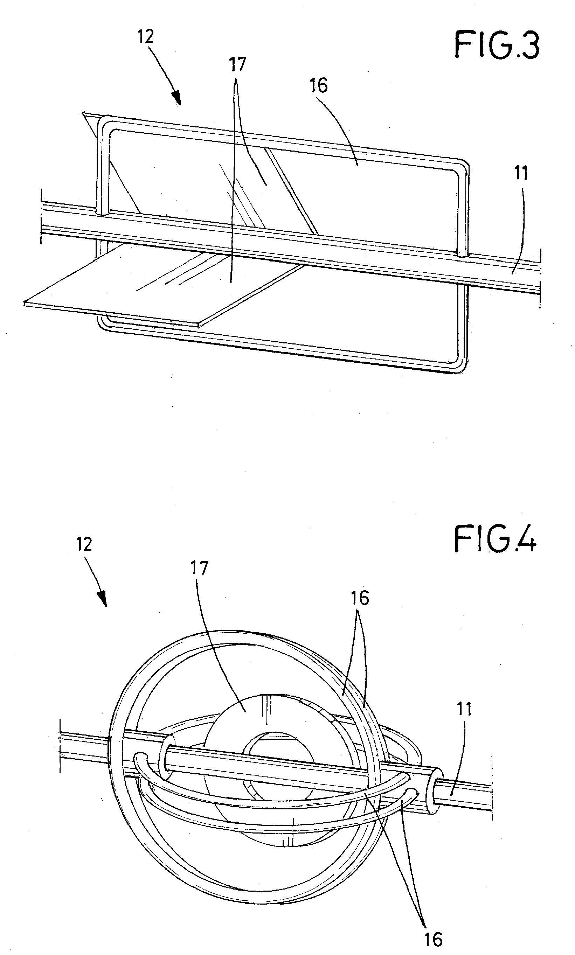

Fig. 3 zeigt eine zweite Weiterentwicklung des Verwirbelungskörpers 12 von Fig. 1, wobei zusätzlich zu den beiden Bügeln 16 noch vollflächige, durchbrechungsfreie Flügel 17 vorgesehen sind.

Fig. 4 zeigt einen Verwirbelungskörper 12, welcher weniger länglich ist als die Ausführungsbeispiele der Fig. 1 bis 3: vier liegende, halbrunde Bügel 16 und zwei kreisrunde, stehende Bügel 16 bilden insgesamt zwei sich kreuzende kreisrunde Ringe, innerhalb derer ein ebenfalls kreisrunder Flügel 17 angeordnet ist. Der Flügel 17 besteht wirtschaftlich vorteilhaft aus einer handelsüblichen Unterleg- bzw. Karosseriescheibe. Er weist daher eine mittige Durchbrechung auf. Andere, mit Durchbrechungen versehene Flügel können z. B. durch die Verwendung von Lochblechen geschaffen werden.

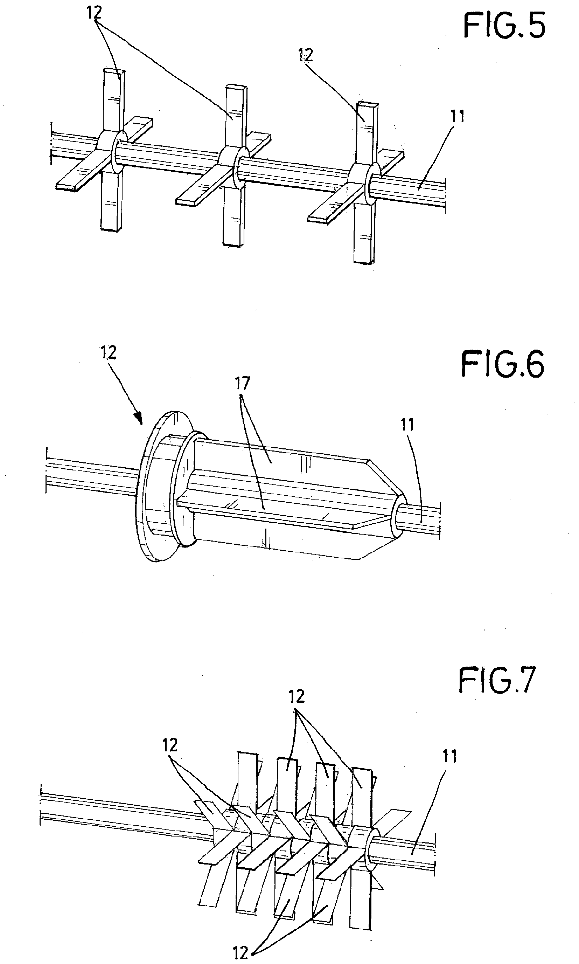

Fig. 5 zeigt eine Mehrzahl von Verwirbelungskörpern 12, die als Kreuze aus Kunststoff ausgestaltet und im axialen Abstand voneinander auf der Filterwelle 11 angeordnet sind und die sich jeweils nur über eine kurze axiale Länge der Filterwelle 11 erstrecken. Es kann vorgesehen sein, lediglich einen einzigen solch kurzen Verwirbelungskörper 12 zu verwenden. Bei zwei oder mehreren, voneinander beabstandeten Verwirbelungskörpern 12 kann jeweils zwischen zwei benachbarten Verwirbelungskörpern 12 ein - in den Zeichnungen nicht dargestellter - Abstandshalter vorgesehen sein, beispielsweise eine auf die Filterwelle 11 aufgeschobene Hülse aus Metall oder Kunststoff.

Um je nach Ausgestaltung des Filters über dessen gesamte Filterfläche 10 hinweg eine ausreichende Verwirbelung des Wassers sicherzustellen, können mehrere von diesen kurzen Verwirbelungskörpern 12 axial hintereinander auf der Filterwelle 11 angeordnet werden, beispielsweise voneinander beabstandet wie in Fig. 5 oder dicht aneinander anliegend wie in Fig. 7: dort ist eine Mehrzahl von Verwirbelungskörpern 12 gezeigt, die wie in Fig. 5 als Kreuze aus Kunststoff ausgestaltet sind. Sie sind jedoch ohne axialen Abstand direkt aneinander anstoßend und umfangsmäßig jeweils zu den benachbarten Verwirbelungskörpern 12 versetzt auf der Filterwelle 11 angeordnet.

Fig. 6 zeigt einen Verwirbelungskörper 12, der als längliches Kunststoffformteil ausgestaltet ist und vier Flügel 17 aufweist, die sich über einen vergleichsweise längeren axialen Abschnitt der Filterwelle 11 erstrecken, so dass beispielsweise mittels eines einzigen derartigen langen Verwirbelungskörpers 12 die gesamte Filterfläche 10 einer Filterkammer 9, beispielsweise des in Fig. 1 dargestellten Filterkorbes, mit Verwirbelungen beaufschlagt werden kann.

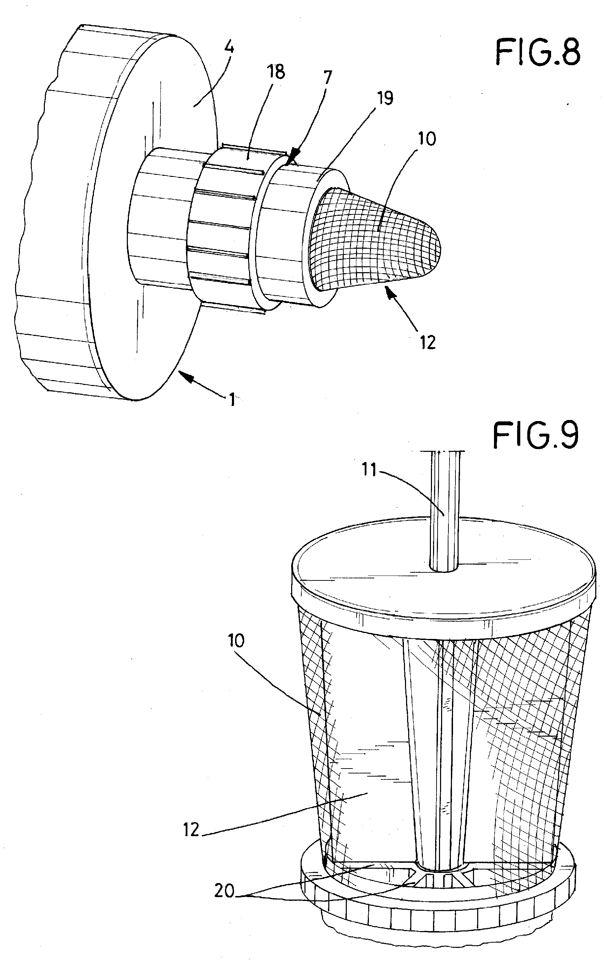

Anstelle eigens vorgesehener Verwirbelungskörper 12, die mitsamt der Filterwelle 11 als zusätzliche Elemente einer ansonsten herkömmlichen Teichpumpe 1 vorgesehen sind, kann nach der Erfindung die Filterfläche 10 selbst in Bewegung versetzt werden, so dass in diesen Fällen die Filterfläche 10 den Verwirbelungskörper 12 bildet. Fig. 8 zeigt hierzu ein Ausführungsbeispiel einer Teichpumpe 1, bei welcher an die Pumpenkammer 4 ein Rohrstutzen 18 anschließt, dessen Ende die Einlassöffnung 7 bildet. Die Filterwelle 11 erstreckt sich durch den Rohrstutzen 18 und trägt eine haubenförmige, als Filterkorb ausgestaltete Filterfläche 10, so dass sich die Filterfläche 10 gemeinsam mit der Filterwelle 11 dreht. Hierzu ist ein Halter 19 auf der Filterwelle 11 befestigt, an dem die Filterfläche 10 ihrerseits befestigt ist. Der Halter 19 weist eine quer zur Filterwelle 11 stehende Scheibe auf, die mit Durchbrüchen versehen ist, so dass Reinwasser in axialer Richtung parallel zur Filterwelle 11 in die Einlassöffnung 7 strömen kann. Alternativ zu der erwähnten Scheibe können Speichen vorgesehen sein, welche den Halter 19 mit der Filterwelle 11 verbinden und eine möglichst große durchströmbare Öffnung innerhalb des Halters 19 schaffen.

Alternativ zu diesem aktiven Antrieb der Filterfläche 10 durch die Filterwelle 11, und insofern abweichend von dem dargestellten Ausführungsbeispiel kann vorgesehen sein (gemäß der Erfindung), dass die Filterfläche 10 frei drehbeweglich gelagert ist, an externen Gehäusebauteilen oder auf der Filterwelle 11, so dass sie beispielsweise unabhängig von der Filterwelle drehbar ist. Aufgrund dieser freien Drehbeweglichkeit kann die Filterfläche 10 beispielsweise von der Wasserströmung in Drehung versetzt werden, welche in die Teichpumpe 1 einströmt.

Wenn - unabhängig von den dargestellten Ausführungsbeispielen - die Filterfläche 10 selbst als Verwirbelungskörper 12 dient und langsamer läuft als die Welle des Antriebsmotors 2 bzw. als die Filterwelle 11, nämlich aufgrund eines zwischengeschalteten Getriebes oder aufgrund einer antriebslosen, frei drehbaren Lagerung der Filterfläche 10, kann die Filterfläche 10 mit Strömungsflächen verbunden sein, die gemeinsam mit der Filterfläche 10 drehbeweglich gelagert sind. Diese Strömungsflächen können einerseits die Verwirbelungswirkung verbessern und andererseits bei einer frei drehbaren Filterfläche 10 ähnlich wie Turbinenschaufeln als Antriebselemente für die Filterfläche 10 wirken, indem sie von der Wasserströmung angeströmt werden und mitsamt der Filterfläche 10 in Drehung versetzt werden. Beispielsweise können derartige Strömungsflächen an der Filterfläche 10 angeordnet sein oder an einem mit der Filterfläche 10 verbundenen Bauteil, ähnlich dem Halter 19.

Ein berührungsloser Antrieb der Filterfläche 10 kann bewirkt werden (gemäß der Erfindung), indem auf der Filterwelle 11 ein Magnet befestigt ist, sofern die Filterfläche 10 aus einem ferromagnetischen Material besteht oder mit Magneten bestückt ist, die mit einem Magneten der Filterwelle 11 zusammenwirken. Zusätzlich kann vorteilhaft ein Verwirbelungskörper 12 innerhalb der Filterfläche 10 auf der Filterwelle 11 angeordnet sein, der durch das verwirbelte Wasser ebenfalls eine Antriebswirkung für die frei drehbar gelagerte Filterfläche 10 entfaltet.

Unterschiedliche Verwirbelungskörper 12 können miteinander kombiniert werden, wie dies bereits an der Kombination einer drehbaren Filterfläche 10, die selbst einen Verwirbelungskörper 12 darstellt, mit einem zusätzlichen Verwirbelungskörper 12 innerhalb der Filterfläche 10 deutlich wurde. Varianten aus der gemeinsamen Anordnung unterschiedlicher Verwirbelungskörper 12, wie sie in den Fig. 1 bis 7 dargestellt sind, können verwendet werden, beispielsweise eine Kombination aus einem langen Verwirbelungskörper 12 und einem auf derselben Filterwelle 11 angeordneten kurzen Verwirbelungskörper 12.
In Fig. 9 ist eine als Filterkorb ausgestaltete Filterfläche 10 dargestellt, die über einen sternförmigen Mitnehmer mit mehreren radialen Speichen 20 mit der Filterwelle 11 verbunden ist, so dass dieser Filterkorb gemeinsam mit der Filterwelle 11 in Drehung versetzt wird und dementsprechend die Filterfläche 10 selbst einen ersten Verwirbelungskörper 12 bildet. Zudem ist innerhalb des Filterkorbes ein zweiter, langer Verwirbelungskörper 12 angeordnet.

Bei dem dargestellten Ausführungsbeispiel dient die Filterwelle 11 dazu, einen Verwirbelungskörper anzutreiben, so dass dieser Verwirbelungen des Wassers in unmittelbarer Nähe der Filterfläche 10 erzeugt. Abgesehen von dieser Möglichkeit, eine drehende Welle zu verwenden, können dem Fachmann geläufige und daher nicht näher erläuterte weitere Möglichkeiten genutzt werden, um nahe der Filterfläche Bewegungen im Wasser zu erzeugen und somit die gewünschten Verwirbelungen in unmittelbarer Nähe der Filterfläche zu bewirken, oder um die Filterfläche selbst in Bewegung zu versetzen, so dass diese den Verwirbelungskörper bildet. Das dargestellte Ausführungsbeispiel stellt eine konstruktiv besonders einfache Möglichkeit dar, eine herkömmliche Teichpumpe vorschlagsgemäß weiterzubilden, was entweder werkseitig durch eine vergleichsweise geringfügige Änderung bei der Produktion der Teichpumpe ermöglicht wird, oder was bei einer bereits vorhandenen Teichpumpe mit vergleichsweise geringem Aufwand - beispielsweise durch Austausch des Gehäuses der vorhandenen Filterkammer gegen ein Gehäuse ermöglicht wird, welches mit einem Verwirbelungskörper 12 und einer Filterwelle 11 ausgestattet ist, wobei die Filterwelle 11 beispielsweise an das Pumpenelement 5 anschließbar ist, um die Drehbewegung des Pumpenelements 5 auf die Filterwelle 11 zu übertragen, beispielsweise ähnlich wie bei einer Klauenkupplung.

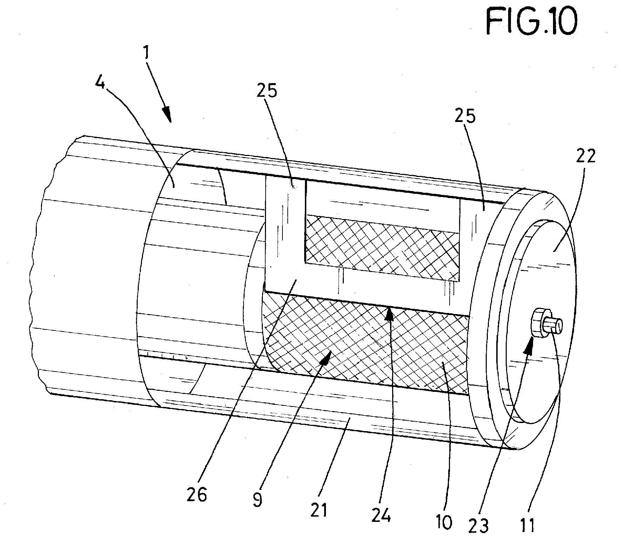

Fig. 10 zeigt ein Ausführungsbeispiel einer Teichpumpe 1, bei welcher die Filterkammer 9 nicht vor die Pumpenkammer 4 ragt und frei endet wie in Fig. 1. Vielmehr hält ein Steg 21 einen Lagerschild 22 im Abstand von der Pumpenkammer 4, indem der Steg 21 von der Pumpenkammer 4 und unterhalb der Filterkammer 9 bis zu dem Lagerschild 22 verläuft. Der Lagerschild 22 erstreckt sich parallel und außerhalb von der Stirnwand 15 der Filterkammer 9. Der Lagerschild 22 trägt ein Lager 23, in welchem die Filterwelle 11 gelagert ist, so dass sie stabil an wenigstens zwei voneinander entfernten Stellen abgestützt ist, von denen sich wenigstens eine Stelle im Motorgehäuse 2 und / oder in der Pumpenkammer 4 und die andere Stelle sich im bzw. am Lagerschild 22 befindet.

Abweichend von dem dargestellten Ausführungsbeispiel muss der Steg 21 nicht unten, sondern er kann an einem anderen Umfangsabschnitt der Filterkammer 9 verlaufen. Auch könnte der Steg durch eine Stange geschaffen sein, beispielsweise könnten mehrere derartige stangenförmige Stege um den Umfang der Filterkammer 9 verteilt angeordnet sein, um den Lagerschild 22 in einer definierten Position zu halten.

Bei dem dargestellten Ausführungsbeispiel ist der Steg 21 zu einer Halbschale ausgestaltet, die ungefähr die untere Hälfte der Filterfläche 10 umgibt, wobei diese Halbschale im Abstand von der Filterkammer 9 verläuft, so dass Wasser ungehindert auch im Bereich dieser unteren Umfangshälfte die Filterfläche 10 durchströmen und in die Filterkammer 9 eintreten kann. Insbesondere wenn die Teichpumpe 1 auf einen schlammigen Teichgrund gestellt wird, wirkt der Steg 21 aufgrund seiner Ausgestaltung als Halbschale und gemeinsam mit dem Lagerschild 22 wie eine Schutzhaube und bietet einen Schutz gegen das Eindringen von Schlammpartikeln in die Filterkammer 9.

Bei dem Ausführungsbeispiel der Fig. 10 ist vorgesehen (gemäß der Erfindung), dass sich sowohl ein Verwirbelungskörper 12 im Inneren der Filterkammer 9 dreht als auch die Filterfläche 10, so dass bei diesem Ausführungsbeispiel zwei Verwirbelungskörper 12 vorgesehen sind, von denen ein äußerer Verwirbelungskörper 12 durch die Filterfläche 10 gebildet ist. Um zu vermeiden, dass die Filterfläche 10 mit ihrer Bewegung eine Strömung erzeugt, welche die Leistung der Teichpumpe 1 in unerwünschtem Maß verringert und den Eintritt von Wasser in die Filterkammer 9 in einem unerwünschten Ausmaß erschwert, ist die Filterfläche 10 mit einer geringeren Drehzahl angetrieben als der innere Verwirbelungskörper 12, der sich im Inneren der Filterkammer 9 befindet.

Der innere Verwirbelungskörper 12 kann beispielsweise genauso ausgestaltet sein wie der in Fig. 1 dargestellte Verwirbelungskörper 12 und auf der Filterwelle 11 fest montiert sein, so dass dieser innere Verwirbelungskörper 12 mit der Drehzahl der Filterwelle 11 umläuft, beispielsweise mit der Motordrehzahl des Antriebsmotors 3. Nahe dem Lager 23 ist ein Untersetzungsgetriebe angeordnet, wobei dieses am Lagerschild 22 und somit außerhalb von der Filterkammer 9 montiert sein kann oder im Inneren der Filterkammer 9.

Das Untersetzungsgetriebe wird eingangsseitig durch die Filterwelle 11 angetrieben, beispielsweise mit der Motordrehzahl des Antriebsmotors 3, und treibt ausgangsseitig die Filterfläche 10 als äußeren Verwirbelungskörper 12 an, beispielsweise mittels einer an der Filterfläche 10 angeordneten Verzahnung. Falls die Filterkammer 9 des Ausführungsbeispiels der Fig. 10 eine eigene Stirnwand 15 nahe dem Lagerschild 22 aufweist, so kann an dieser Stirnwand 15 eine Verzahnung vorgesehen sein, die den Antrieb der Filterfläche 10 ermöglicht. Jedoch kann der Lagerschild 22 die zweite Stirnwand der Filterkammer 9 bilden, welche der ersten Stirnwand, nämlich der Pumpenkammer 4, gegenüber liegt, so dass in diesem Fall die Filterfläche 10 einfach als Rohrabschnitt ausgestaltet sein kann.

Weiterhin ist bei dem Ausführungsbeispiel der Fig. 10 ein Abstreifer 24 dargestellt, der zwei Haltearme 25 und eine Abstreifklinge 26 aufweist. Diese Bauteile des Abstreifers 24 können gemeinsam als ein annähernd U-förmiges Stanzteil aus Blech ausgestaltet sein. Die beiden Haltearme 25 sind an dem Steg 21 befestigt. Dabei ist der Abstreifer 24 derart angeordnet, dass die Drehrichtung der Filterfläche 10 Material, welches ggf. außen an der Filterfläche 10 anliegen könnte, gegen die freie, den Haltearmen 25 gegenüberliegende Kante der Abstreifklinge 26 transportiert.

Die Befestigung der Haltearme 25 an dem Steg 21 erfolgt bei dem dargestellten Ausführungsbeispiel werkzeuglos, indem die Haltearme 25 mit ihren annähernd U-förmig geformten Endstücken auf die Kante des Stegs 21 aufgesteckt werden. Auf diese Weise kann im Bedarfsfall der Abstreifer 24 nachträglich an der Teichpumpe 1 montiert werden, ohne hierzu Werkzeug benutzen oder die Teichpumpe 1 aus dem Teich herausnehmen zu müssen. Unter den meisten in der Praxis vorkommenden Betriebsbedingungen kann die Teichpumpe 1 jedoch über einen langen Zeitraum störungs- und verstopfungsfrei ohne einen Abstreifer 24 betrieben werden.

Abweichend von dem dargestellten Ausführungsbeispiel kann eine Befestigung des Abstreifers 24 am Steg 21 mit Schrauben oder ähnlichen Befestigungselementen vorgesehen sein. Auf diese Weise kann sichergestellt werden, dass die Abstreifklinge 26 eine bestimmte Position zuverlässig beibehält. Insbesondere wenn am Steg 21 zur Schraubbefestigung des Abstreifers 24 Langlöcher vorgesehen sind, kann sowohl die Ausrichtung der Abstreifklinge 26 im Verhältnis zur Oberfläche der Filterfläche 10, als auch ggf. der Druck, mit welchem die Abstreifklinge 26 der Filterfläche anliegt, beeinflusst und nach Wunsch eingestellt werden.

Bei dem Ausführungsbeispiel der Fig. 1 ist die Filterwelle 11 am Ende der Filterkammer 9 an der Stirnwand 15 mittels des Lagers 23 geführt, wenn die Filterfläche 10 einschließlich der Stirnwand 15 fest stehend montiert ist. Wenn jedoch die gesamte Filterfläche 10 einschließlich der Stirnwand 15 drehbar gelagert ist, um selbst einen Verwirbelungskörper 12 zu bilden, bedeutet dies für die Filterwelle 11, dass sie im Bereich des Motorgehäuses 2 und auch der Pumpenkammer 4 gelagert und geführt sein kann, von der Pumpenkammer 4 aus jedoch ungeführt frei vorsteht. Wird das Lager 23 jedoch fest am Gehäuse der Teichpumpe 1 gehalten, beispielsweise mittels eines oder mehrerer Stege und ggf. eines Lagerschildes wie bei dem Ausführungsbeispiel der Fig. 10, so kann auch bei einer drehbeweglichen Filterfläche 10 die Filterwelle 11 im Abstand von dem Gehäuse der Teichpumpe 1 gelagert und geführt sein.

Die unterschiedlichen Ausgestaltungen der Verwirbelungskörper 12 einschließlich einer beweglichen Filterfläche 10 verdeutlichen, dass eine Vielzahl von unterschiedlichen Geometrien und Anordnungen genutzt werden kann, um die gewünschte Verwirbelung des Wassers an der Außenseite der Filterfläche 10 zu bewirken. Für unterschiedliche konstruktive Ausgestaltungen der Teichpumpen 1 können unterschiedliche Verwirbelungskörper 12 vorteilhaft sein. Beispielsweise können trotz derselben Geometrie zwei unterschiedliche Teichpumpen 1 geschaffen werden, wenn deren Pumpenelemente 5 mit zwei verschiedenen Drehzahlen laufen. Für die daraus resultierenden unterschiedlichen Pumpen-Ansaugströmungen können ggf. unterschiedliche Verwirbelungskörper 12 jeweils optimal geeignet sein. Jedenfalls können die Verwirbelungskörper 12 vorteilhaft stets so ausgestaltet und angeordnet werden, dass die Filterfläche 10 einerseits zuverlässig von Anlagerungen freigehalten wird, und dass andererseits die Pumpen-Ansaugströmung nicht zu stark beeinträchtigt wird, um nach wie vor einen ausreichenden Wasserstrom durch die Teichpumpe 1 hindurch zu gewährleisten.

## Patentansprüche

1. Teichpumpe (1) zur Erzeugung einer die Teichpumpe (1) durchströmenden Wasserströmung, mit einer Einlassöffnung (7) für anzusaugendes Wasser, und mit einem in Strömungsrichtung vorder Einlassöffnung (7) angeordneten Filter,
wobei der Filter eine Filterkammer (9) begrenzt, die zumindest teilweise von einer für Wasser durchlässigen Filterfläche (10) umgeben ist, derart, dass außerhalb der Filterfläche (10) ungefiltertes Rohwasser und innerhalb der Filterkammer (9) gefiltertes Reinwasser vorgesehen ist, wobei eine Filterwelle (11) in der Filterkammer (9) verläuft, wobei die Teichpumpe (1) einen Verwirbelungskörper (12) aufweist, der beweglich gelagert und drehangetrieben ist, derart, dass an der zum Rohwasser gerichteten äußeren, so genannten Rohseite der Filterfläche (10) Verwirbelungen erzeugt werden, die das Anlagern von Feststoffen an der Rohseite der Filterfläche (10) erschweren oder verhindern,
**dadurch gekennzeichnet, dass** die Filterfläche (10) relativ zur Filterwelle beweglich gelagert ist und berührungslos in Drehung versetzbar ist und den Verwirbelungskörper (12) bildet.

2. Teichpumpe nach Anspruch 1,
**dadurch gekennzeichnet, dass** die um ihre Längsachse drehangetriebene Filterwelle (11) in der Filterkammer (9) verläuft und ein Magnetelement trägt,
wobei die Filterfläche (10) mit dem Magnetelement magnetisch zusammenwirkend ausgestaltet ist, derart, dass mittels Magnetkraft die Filterfläche (10) durch das sich drehende Magnetelement drehangetrieben ist.

3. Teichpumpe nach Anspruch 1,
**dadurch gekennzeichnet,**
**dass** die Filterfläche (10) frei drehbeweglich gelagert ist, derart, dass sie unabhängig von der Filterwelle (11) drehbar und von der in die Teichpumpe (1) einströmenden Wasserströmung in Drehung versetzbar ist.

4. Teichpumpe nach einem der vorhergehenden Ansprüche,
**dadurch gekennzeichnet,**
**dass** ein zusätzlicher Verwirbelungskörper (12) innerhalb der Filterkammer (9) beweglich gelagert ist.

5. Teichpumpe nach einem der vorhergehenden Ansprüche,
**dadurch gekennzeichnet,**
**dass** die Filterwelle (11) die Filterfläche (10) oder einen zusätzlichen Verwirbelungskörper (12) trägt.

6. Teichpumpe nach Anspruch 5,
**dadurch gekennzeichnet,**
**dass** die Filterwelle (11) um ihre Längsachse drehangetrieben ist und die Filterfläche (10) beziehungsweise der zusätzliche Verwirbelungskörper (12) mitnahmewirksam mit der Filterwelle (11) verbunden ist.

7. Teichpumpe nach Anspruch 6,
**dadurch gekennzeichnet,**
**dass** die Filterwelle (11) mit einem drehbeweglichen Pumpenelement (5) verbunden und von diesem drehangetrieben ist.

8. Teichpumpe nach Anspruch 6,
**dadurch gekennzeichnet,**
**dass** ein Antriebsmotor (3) der Teichpumpe (1) eine Motorwelle (6) aufweist
und die Filterwelle (11) als Verlängerung der Motorwelle (6) ausgestaltet und gemeinsam mit dieser drehbar ist.

9. Teichpumpe nach Anspruch 6,
**dadurch gekennzeichnet,**
**dass** der Filterwelle (11) ein eigener Antriebsmotor zugeordnet ist, welcher die Filterwelle (11) in Drehung versetzend antreibt.

10. Teichpumpe nach Anspruch 6,
**dadurch gekennzeichnet,**
**dass** der Filterfläche (10) oder dem zusätzlichen Verwirbelungskörper (12) ein Getriebe vorgeschaltet ist, derart, dass die Filterfläche (10) oder der Verwirbelungskörper (12) mit einer anderen Drehzahl läuft als Antriebsmittel, von denen die die Filterwelle (11) drehangetrieben ist.

11. Teichpumpe nach einem der vorhergehenden Ansprüche,
**dadurch gekennzeichnet,**
**dass** ein zusätzlich zu der Filterfläche (10) vorhandener Verwirbelungskörper (12) einen um einen Freiraum verlaufenden, beweglichen Bügel (16) aufweist.

12. Teichpumpe nach einem der vorhergehenden Ansprüche,
**dadurch gekennzeichnet,**
**dass** ein zusätzlich zu der Filterfläche (10) vorhandener Verwirbelungskörper (12) einen beweglichen Flügel (17) aufweist.

13. Teichpumpe nach Anspruch 12,
**dadurch gekennzeichnet,**
**dass** der Flügel (17) eine Durchbrechung aufweist.

14. Teichpumpe nach einem der vorhergehenden Ansprüche,
**dadurch gekennzeichnet,**
**dass** die Filterfläche (10) haubenartig als so genannter Filterkorb ausgestaltet ist.

15. Teichpumpe nach einem der Ansprüche 1 bis 13,
**dadurch gekennzeichnet,**
**dass** die Filterfläche (10) als Rohrabschnitt ausgestaltet ist.

16. Teichpumpe nach einem der vorhergehenden Ansprüche, **dadurch gekennzeichnet,**
**dass** ein Abstreifer (24) der Rohseite der Filterfläche (10) anliegt.

17. Teichpumpe nach den Ansprüchen 4 und 10,
**dadurch gekennzeichnet,**
**dass** ein Getriebe zwischen dem zusätzlichen, inneren Verwirbelungskörper (12) und der Filterfläche (10) angeordnet ist, derart, dass die Filterfläche (10) mit einer geringeren Drehzahl angetrieben ist als der zusätzliche innere Verwirbelungskörper (12).

18. Teichpumpe nach Anspruch 5,
**dadurch gekennzeichnet,**
**dass** sich vom Gehäuse der Teichpumpe (1) aus ein Steg (21) entlang der Filterkammer (9) zu einem Lagerschild (22) erstreckt,
wobei der Lagerschild (22) ein Lager (23) aufweist, in welchem die Filterwelle (11) gelagert ist.

19. Teichpumpe nach einem der vorhergehenden Ansprüche,
**dadurch gekennzeichnet,**
**dass** die Filterkammer (9) zumindest teilweise und im Abstand von einer Schutzhaube umgeben ist,
wobei die Schutzhaube unterhalb von der Filterkammer (9) verläuft.

## Claims

1. Pond pump (1) to make water flow through the pond pump (1),
having an inlet hole (7) for water to be drawn in
and having a filter arranged in the flow upstream of the inlet hole (7), where the filter delimits a filter chamber (9) that is at least partly surrounded by a filter surface (10) that lets water through,
in such a way that raw water that has not been filtered is provided for outside the filter surface (10) and clean water that has been filtered is provided for inside the filter chamber (9),
where a filter shaft (11) extends inside the filter chamber (9) and where the pond pump (1) incorporates a swirl element (12) that is mounted movably and driven rotarily,
in such a way that on the outer, so-called raw side of the filter surface (10) that is oriented towards the raw water swirls are set up that impede or hinder the deposit of solid matter on the raw side of the filter surface (10),
**characterised in**
**that** the filter surface (10) is mounted so as to be movable relative to the filter shaft
and can be contactlessly made to rotate and forms the swirl element (12).

2. Pond pump in accordance with claim 1, **characterised in that** the filter shaft (11) that is driven rotarily about its longitudinal axis extends inside the filter chamber (9) and carries a magnetic element, where the filter surface (10) is designed to co-act magnetically with the magnetic element,
in such a way that the filter surface (10) is rotarily driven by magnetic force from the rotating magnetic element.

3. Pond pump in accordance with claim 1, **characterised in that** the filter surface (10) is mounted freely movably in such a way that it is rotatable independently of the filter shaft (11) and can be made to rotate by the flow of water into the pond pump (1).

4. Pond pump in accordance with any one of the preceding claims,
**characterised in**
**that** an additional swirl element (12) is mounted movably inside the filter chamber (9).

5. Pond pump in accordance with any one of the preceding claims,
**characterised in**
**that** the filter shaft (11) carries the filter surface (10) or an additional swirl element (12).

6. Pond pump in accordance with claim 5, **characterised in that** the filter shaft (11) is either driven rotarily about its longitudinal axis and the filter surface (10) or the additional swirl element (12) is connected to the filter shaft (11) so as to be effectively carried around with the filter shaft (11).

7. Pond pump in accordance with claim 6, **characterised in that** the filter shaft (11) is connected to a rotarily movable pump element (5) and is driven rotarily by this rotarily movable pump element (5).

8. Pond pump in accordance with claim 6, **characterised in that** a drive motor (3) of the pond pump (1) incorporates a motor shaft (6) and the filter shaft (11) is designed as an extension of the motor shaft (6) and can be rotated together with this motor shaft (6).

9. Pond pump in accordance with claim 6, **characterised in that** the filter shaft (11) is assigned its own drive motor to drive the filter shaft (11) and so make it rotate.

10. Pond pump in accordance with claim 6, **characterised in that** a gear unit is fitted upstream of the filter surface (10) or the additional swirl element (12),
in such a way that the filter surface (10) or the swirl element (12) rotates at a different speed from the driving means by which the filter shaft (11) is rotated.

11. Pond pump in accordance with any one of the preceding claims,
**characterised in**
**that** a swirl element (12) that is provided in addition to the filter surface (10) incorporates a movable bar (16) that extends around a free space.

12. Pond pump in accordance with any one of the preceding claims,
**characterised in**
**that** a swirl element (12) that is provided in addition to the filter surface (10) incorporates a movable vane (17).

13. Pond pump in accordance with claim 12, **characterised in that** the vane (17) incorporates a through-hole.

14. Pond pump in accordance with any one of the preceding claims,
**characterised in**
**that** the filter surface (10) is designed as a so-called basket filter like a hood.

15. Pond pump in accordance with any one of claims 1 to 13, **characterised in**
**that** the filter surface (10) is designed as a tube section.

16. Pond pump in accordance with any one of the preceding claims,
**characterised in**
**that** a wiper (24) lies against the raw side of the filter surface (10).

17. Pond pump in accordance with claims 4 and 10, **characterised in that** a gear unit is arranged between the additional, inner swirl element (12) and the filter surface (10),
in such a way that the filter surface (10) is driven rotarily at a lower speed than the additional, inner swirl element (12).

18. Pond pump in accordance with claim 5, **characterised in that** a web (21) extends along the filter chamber (9) from the housing of the pond pump (1) to a bearing end plate (22),
where the bearing end plate (22) incorporates a bearing (23) in which the filter shaft (11) is mounted.

19. Pond pump in accordance with any one of the preceding claims,
**characterised in**
**that** the filter chamber (9) is at least partly enclosed by and spaced apart from a protective hood, where the protective hood extends below the filter chamber (9).

## Revendications

1. Pompe pour étang (1) pour générer un flux d'eau traversant la pompe pour étang (1),
comprenant un orifice d'admission (7) pour l'eau à aspirer,
et un filtre disposé, dans le sens de l'écoulement, en amont de l'orifice d'admission (7),
sachant que le filtre délimite une chambre (9) à filtre entourée au moins partiellement d'une surface filtrante (10) perméable à l'eau,
de sorte qu'à l'extérieur de la surface filtrante (10) est prévue de l'eau brute non filtrée et qu'à l'intérieur de la chambre (9) à filtre est prévue de l'eau pure filtrée,
sachant qu'un arbre (11) de filtre s'étend dans la chambre (9) à filtre, sachant que la pompe pour étang (1) présente un corps générateur de turbulences (12) en appui mobile et entraîné en rotation,
de sorte que sur le côté extérieur de la surface filtrante (10) dit brut et regardant vers l'eau brute sont générées des turbulences compliquant ou empêchant l'accumulation de matières solides sur le côté brut de la surface filtrante (10),
**caractérisée en ce**
**que** la surface filtrante (10) est en appui mobile relativement à l'arbre du filtre
et **qu'**elle peut être mise en rotation sans contact et forme le corps générateur de turbulences (12).

2. Pompe pour étang selon la revendication 1, **caractérisée en ce que** l'arbre (11) du filtre entraîné en rotation autour de son axe longitudinal s'étend dans la chambre (9) du filtre et comporte un aimant,
sachant que la surface filtrante (10) est configurée de sorte à interagir magnétiquement avec l'aimant,
de sorte qu'au moyen de la force magnétique la surface filtrante (10) est entraînée en rotation par l'aimant en train de tourner.

3. Pompe pour étang selon la revendication 1, **caractérisée en ce que** la surface filtrante (10) est en appui lui permettant de tourner librement, de sorte à tourner indépendamment de l'arbre (11) du filtre et à pouvoir entrer en rotation sous l'effet du flux d'eau affluant dans la pompe pour étang (1).

4. Pompe pour étang selon l'une des revendications précédentes,
**caractérisée en ce**
**qu'**un corps (12) supplémentaire générateur de turbulences se trouve en appui mobile à l'intérieur de la chambre (9) du filtre.

5. Pompe pour étang selon l'une des revendications précédentes,
**caractérisée en ce**
**que** l'arbre (11) du filtre porte la surface filtrante (10) ou un corps (12) supplémentaire générateur de turbulences.

6. Pompe pour étang selon la revendication 5, **caractérisée en ce que** l'arbre (11) du filtre est entraîné en rotation autour de son axe longitudinal et que la surface filtrante (10) ou le corps (12) supplémentaire générateur de turbulences est relié avec l'arbre (11) du filtre ayant pour effet de l'entraîner.

7. Pompe pour étang selon la revendication 6, **caractérisée en ce que** l'arbre (11) du filtre est relié avec un élément (5) de pompe mobile en rotation et qu'il est entraîné en rotation par ce dernier.

8. Pompe pour étang selon la revendication 6, **caractérisée en ce qu'**un moteur d'entraînement (3) de la pompe pour étang (1) présente un arbre moteur (6)
et que l'arbre (11) du filtre est configuré comme prolongement de l'arbre moteur (6) et qu'il peut tourner solidairement avec ce dernier.

9. Pompe pour étang selon la revendication 6, **caractérisée en ce qu'**à l'arbre (11) du filtre est affecté son propre moteur d'entraînement, lequel entraîne l'arbre (11) du filtre pour lui imprimer une rotation.

10. Pompe pour étang selon la revendication 6, **caractérisée en ce qu'**une transmission est intercalée en amont de la surface filtrante (10) ou du corps (12) supplémentaire générateur de turbulences,
de sorte que la surface filtrante (10) ou le corps (12) générateur de turbulences tourne à une autre vitesse que des moyens d'entraînement par lesquels l'arbre (11) du filtre est entraîné en rotation.

11. Pompe pour étang selon l'une des revendications précédentes,
**caractérisée en ce**
**qu'**un corps (12) générateur de turbulences, présent en plus de la surface filtrante (10), comporte un étrier mobile (16) s'étendant autour d'un espace libre.

12. Pompe pour étang selon l'une des revendications précédentes,
**caractérisée en ce**
**qu'**un corps (12) générateur de turbulences, présent en plus de la surface filtrante (10), comporte une pale (17) mobile.

13. Pompe pour étang selon la revendication 12, **caractérisée en ce que** la pale (17) présente une perforation.

14. Pompe pour étang selon l'une des revendications précédentes,
**caractérisée en ce**
**que** la surface filtrante (10) est configurée comme un panier filtrant ainsi nommé rappelant un capot.

15. Pompe pour étang selon l'une des revendications 1 à 13, **caractérisée en ce**
**que** la surface filtrante (10) est configurée en segment de tuyau.

16. Pompe pour étang selon l'une des revendications précédentes,
**caractérisée en ce**
**qu'**un racloir (24) applique contre le côté brut de la surface filtrante (10).

17. Pompe pour étang selon les revendications 4 et 10, **caractérisée en ce qu'**une transmission est située entre le corps (12) intérieur supplémentaire générateur de turbulences et la surface filtrante (10),
de sorte que la surface filtrante (10) est entraînée à une vitesse inférieure à celle du corps (12) intérieur supplémentaire générateur de turbulences.

18. Pompe pour étang selon la revendication 5, **caractérisée en ce que** depuis le boîtier de la pompe pour étang (1) s'étend une nervure (21) le long de la chambre (9) de filtre en direction d'un flasque (22) de palier, sachant que le flasque (22) de palier présente un palier (23) dans lequel prend appui l'arbre (11) du filtre.

19. Pompe pour étang selon l'une des revendications précédentes,
**caractérisée en ce**
**que** la chambre de filtre (9) est au moins en partie entourée par un capot de protection distant de celle-ci, sachant que le capot de protection s'étend en dessous de la chambre (9) de filtre.
